# EUROPEAN PATENT SPECIFICATION

(11) **EP 3 636 538 B1**
(45) Date of publication and mention of the grant of the patent: **25.01.2023**
(21) Application number: 19162957.5
(22) Date of filing: 14.03.2019
(51) Int. Cl.: B63J 3/04, B63H 9/06

(54) **INTEGRATED PHOTOVOLTAIC SYSTEM INSTALLABLE ON LEISURE VESSELS**
INTEGRIERTE PHOTOVOLTAIKANLAGE, DIE AUF FREIZEITSCHIFFEN INSTALLIERT WERDEN KANN
SYSTÈME PHOTOVOLTAÏQUE INTÉGRÉ POUVANT ÊTRE INSTALLÉ SUR UN BATEAU DE PLAISANCE

(30) Priority: 12.03.2018 IT 201800003437
(43) Date of publication of application: 15.04.2020
(73) Proprietor: Fabiani, Maurizio, 57128 Livorno (IT)
(72) Inventor: Fabiani, Maurizio, 57128 Livorno (IT)
(74) Representative: Leotta, Antonio

(56) References cited:
- WO-A1-2018/039705
- CN-B- 104 818 682
- DE-A1- 10 215 634
- US-A1- 2014 144 362

## Description

### TECHNICAL FIELD

The invention relates to a motorized pleasure boat comprising a photovoltaic complex integrated in the roof of the fly bridge.

### STATE OF THE ART

To date, the research and experimentation on the use of renewable energies in boating have produced above all purely prototype boats which, although (rarely) with interesting autonomies, have been made with materials, technologies and forms not much compatible with amateur pleasure boating or, even less, for professional boats.

They are known installations of small surfaces of solar panels which may perhaps keep the batteries of the boat charged during long periods of inactivity of the same.

The possibility of installing small wind turbine generators on a boat is also known.

The prototypes, or even some concrete realization proposed to the public by boaters, have nevertheless received lukewarm welcome; because, in fact, the benefits are laughable in that the energy obtained from the solar panels is used almost exclusively for some marginal users (although this does in any case constitute a certain energy saving otherwise produced with the fuel of the boat, or taken tout-court from the supply means of the port quay); but certainly not to make up for the massive use of classic fuels.

For example, DE 10215634 describes a boat in which wind power generators are installed comprising vertical axis wind turbines which are mounted on collapsible supports so that when not in use the wind generator can be collapsed on the deck surface of the boat. Wind energy is exploited not as a propulsion mean of the boat but rather to generate electricity for on-board utilities.

Instead, in WO2018039705A1 and in US2014144362A1 are described boats in which at least one sail is mounted on a collapsible shaft and covered with photovoltaic panels. The sail makes it possible to exploit the wind force as the propulsion system of the boat and also allows the production of electricity from the integrated photovoltaic panels. Furthermore, the fact of being mounted on a reclining shaft allows the sail to be lowered when not in use, eventually putting it back in special storage compartments. The proposed solutions are very valid to integrate the sail propulsion with the production of electricity of a photovoltaic system, however they are not optimized for pleasure boats which, having limited dimensions and surfaces, need to optimize the spaces and photovoltaic surfaces exposed to solar light to obtain energy production that can meet the needs of the board, possibly even propulsive.

### SUMMARY OF THE INVENTION

The purpose of the present invention is to propose a pleasure boat with a hybrid engine provided with an integrated photovoltaic complex suitable for ensuring a non-negligible autonomy without use of fuel even for motor boats of a certain dimensional relevance.

Another object of the present invention is to propose a pleasure boat provided with a photovoltaic complex that is able to exploit both wind and solar energy.

Said and other purposes are achieved by means of a pleasure boat according to claim 1.

The photovoltaic complex also comprises a solar apparatus comprising a flat supporting structure integrated in a roof located on the top of a fly-bridge of said boat, said flat supporting structure being substantially a container which carries a fixed solar panel on which two further solar panels are placed hinged longitudinally so as to be able to rotate to the sides of said container, said control system being adapted to activate and control also said solar apparatus.

Still advantageously, the sail has an overall pentagonal shape and comprises:
a central element directly supported by a shaft hinged to the base on the supporting structure associated with said roof; and
two side panels which can fold over said central element to decrease the surface of said sail so that it can lie inside said container above said solar panels of said solar apparatus.

Advantageously, the first mechanized supporting structure allows said sail to rotate from a horizontal position reclined astem, passing through said vertical position, to a horizontal position lying towards the bow, in which said sail rests on a supporting shaft arranged near the bow of said boat.

### BRIEF DESCRIPTION OF THE DRAWINGS

These and other features and advantages of the invention will become apparent from the following description of preferred embodiments provided below, in accordance with the proposed claims, and with the aid of the accompanying drawings, in which:
- Fig. 1 shows a schematic side view of a boat according to the present invention with a relative wind-photovoltaic complex in the closed configuration;
- Fig. 2 shows a perspective view from above of the boat of Fig. 1;
- Fig. 3 shows a perspective view similar to that of Fig. 2 in which the boat of the invention shows the supporting structure of the wind-solar system in a raised and open position and the wind system in the closed configuration;
- Fig. 4 shows a perspective view similar to that of Fig. 2 in which the boat of the invention shows the supporting structure of the wind-solar system in a raised and open position and the wind system in an open configuration;
- Fig. 5 shows a perspective view similar to that of Fig. 2 in which the boat of the invention has the supporting structure of the wind-solar system extended forward towards the bow and open and the wind system in the closed configuration;
- Fig. 6 shows a side view of a portion of the boat in the configuration of Fig. 5;
- Fig. 7 shows some components of the wind-photovoltaic complex of the boat of the invention: Fig. 7A shows in a partial perspective view the area of attachment to the roof of the fly-bridge of the wind-solar system, Fig. 7B shows in view from above the structure of the wind-solar system in the closed configuration, Fig. 7C shows in frontal and lateral views a support with bearings of the wind-solar system.

### DESCRIPTION OF THE PREFERRED EMBODIMENTS

With reference to the figures, a motorized pleasure boat, 20, according to the present invention comprises a photovoltaic complex consisting of a wind-solar apparatus, 2, and a solar apparatus, 3, installed, according to a preferred embodiment of the invention, on a roof, 1, of the fly-bridge or other upper deck of the boat.

The boat 20 is for example a pleasure boat with an overall length of about thirty meters, weighing about one hundred tons, equipped with two diesel engines capable of imparting a cruising speed of about twenty knots and with two (or more) electrical engines and relative supply batteries of appropriate type and quantities.

The wind-solar apparatus 2, indicated below also as a solar sail, comprises a first mechanized supporting structure, 4, which constitutes the support of the wind-solar apparatus itself, suitable for supporting a sail of an overall pentagonal shape. The mechanized supporting structure 4 can be moved between an initial horizontal "resting" position (longitudinal to the hull) and on the highest level of the boat, to take a vertical or sub-vertical position based on opportunities assessments carried out moment by moment by the ship's captain. The structure of the solar sail 2 comprises a central shaft, 8, positioned in axis on the centre line of the boat, and a tubular stainless steel frame which delimits a fixed central element, 9, of the sail with which the shaft 8 integrally rotates towards bow or stern in the lowering/raising phases. In the fixed central element 9 are placed structural slabs (not visible in the figure as of known prior art) in composite materials fixed to the tubulars on the perimeter at regular intervals and suitable to provide the necessary rigidity to the fixed central element 9. Said structural panels are fitted with solar panels chosen from "monocrystalline", "polycrystalline" or "amorphous" according to an algorithm that has evaluated their greater suitability with respect to the most appropriate exposures in the various operating conditions of the boat. The fixed central element 9, directly supported by the shaft 8, is hinged to the base on the supporting structure 4 associated with the roof 1, so that it can be tilted towards the bow or stern. Two side panels, 7, are hinged to two opposite right and left sides of the fixed central element 9 so that they can fold back on the fixed central element 9, to decrease the overall surface of the sail so that this can rest inside the housing provided on roof 1 above the solar system 3. The mechanized supporting structure 4 is suitable for carrying the solar sail 2 from the substantially horizontal rest position in which it laids towards the stern, to a raised vertical or sub-vertical position and from there to a position tilted towards the bow until it rests in position substantially horizontal on a special supporting shaft, 5, installed near the bow. A control and management system is configured to open the solar sail 2 by extending the two side panels 7 once it has reached the vertical position. The solar sail 2 is preferably made with semi-rigid or rigid panels (better if not woven, and in any case not too flexible), and is coated, advantageously on both sides, by photovoltaic panels which, by means of special ducts made in the structure of the sail itself, will send the energy produced to a regulation and accumulation system made of batteries allocated in appropriate compartments identified inside the boat and from there arranged to power electric motors on mechanically implanted derivations on the axle lines of the endothermic propulsion system, the whole not shown as of known art.

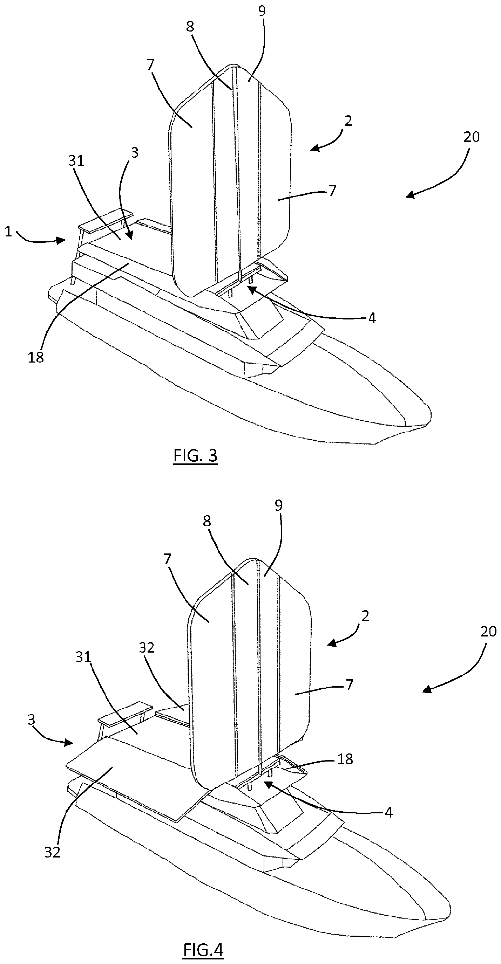

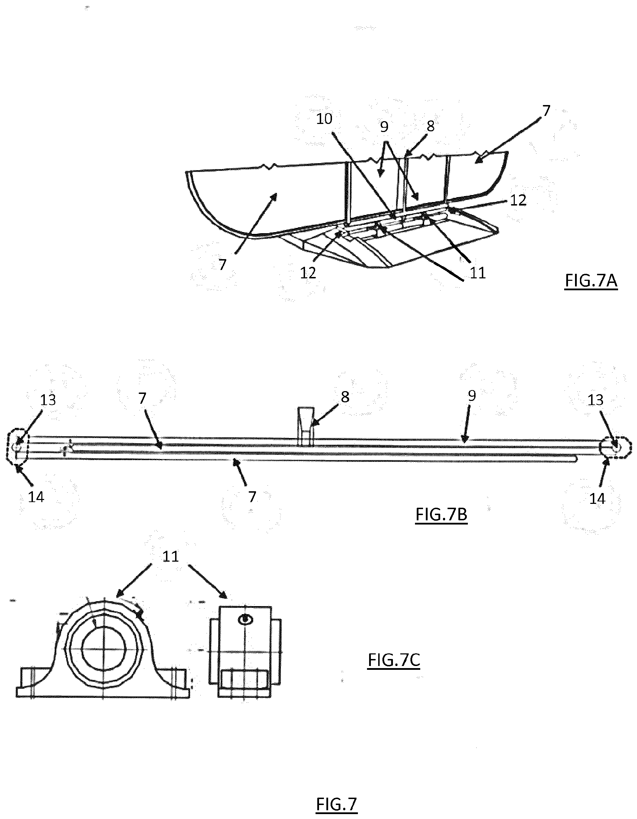

With reference in particular to Fig. 7, the side panels 7 are hinged to the fixed central element 9 by means of hinges, 13, and are rotated about the relative axes by means of actuators, 14, so that they can pass from a closed configuration of the solar sail 2, shown in Fig. 7B, in which the side panels 7 are superimposed on the fixed central element 9 to an open configuration of the solar sail 2, shown for example in Figs. 3, 4 and 5, in which the side panels 7 are aligned with the fixed central element 9 on the two sides thereof. The closed configuration of the solar sail 2 involves a minimal surface encumbrance while the open configuration involves the maximum sail area and the maximum surface of solar panels exposed to the sun. Obviously, both the wind power and the photovoltaic energy production also depend substantially on the incidence direction of the wind and the sun, respectively, on the sail surface. The sail area in the open configuration is thus almost tripled compared to that in the closed configuration. To actuate the actuators 14 in the event of a failure, an external power take-off is provided to each actuator on which, by means of a normal key (alley or star), it is possible, although slowly, to manage the movement required for securing the solar sail 2. The wind-solar apparatus 2 is thus constituted by an extensible structure of solar panels, articulated on three surfaces of which one is fixed and two, lateral to it, which in rest conditions fold over the first. With reference to Fig. 7A, the mechanized supporting structure 4 of the wind-solar system comprises an axle 10, integral with the shaft 8, near the relative end. The axle 10 crosses two supports, 11, provided with bearings which constrain the axle 10 transversely to the roof 1, allowing it to rotate. The axle 10, after passing through the supports 11, continues until it enters underneath side casings, 12, of the roof 1 in order to be protected and in which are positioned, respectively on the left and on the right, two gearmotors with orthogonal axes (not shown). Each gearmotor is capable, on its own, of moving the sail to raise/lower it towards the bow or stern. The redundancy of the handling system, combined with the fact that the gear of each gearmotor "in grip" on the sail shaft has a "release" system from the axle, which allows, in the event of a gearmotor failure, that the other can still handle to secure the solar sail 2. The rotation of the axle 10 and therefore of the shaft 8 can obviously take place through servomechanisms which can be realized with different technologies such as actuator cylinders or other servomechanisms, easily available on the market or assembled by the technician of the sector without the use of an inventive activity.

The solar apparatus 3, hereinafter also referred to as the photovoltaic gazebo, consists of a flat supporting structure, with vertical or sub-vertical supports (not shown), integrated in the roof 1, which advantageously has a reticular structure (not shown). In the embodiment shown, the roof 1 is placed on top of a fly-bridge abaft of the driving cabin. The flat supporting structure of the solar apparatus 3 is substantially a container, 18, in the form of a parallelepiped which on the inner bottom surface has a fixed solar panel, 31, above which are placed two further solar panels, 32, supported by sheets of alveolar composite hinged, to the left and to the starboard respectively, to the raised side edges of the container 18 itself. Rotation actuators (not shown) control the rotation of the further solar panels 32 hinged longitudinally, which are thus lifted by rotation and then arranged in a horizontal or sub-horizontal position on the sides of the container 18 protruding externally with respect to the width of the boat 20, for a measure equal to the width of the further panel 32 itself. The container 18 is adapted to receive inside the solar sail 2 with its side panels 7 folded in a rest configuration. In the closing or rest configurations the three said panels 31 and 32 act in turn as support for the complex of the panels that make up the solar sail 3.

The boat 20 is also provided with a control and management system based on algorithms and instrumental commands which allow to activate the associated or disjoint operation of both the wind-solar 2 and solar 3 apparatus previously considered. This allows, above all, to obtain greater performance considering that the wind-solar apparatus 2 is more susceptible to partialisations due to weather conditions, while the solar apparatus 3 can enhance the overall action of the propulsion system of the boat itself, while maintaining good performance even with bad weather conditions.

The operating modes and advantages of a boat according to the present invention, as described above in a preferred non-limiting embodiment thereof, are immediately understandable and summarized below.

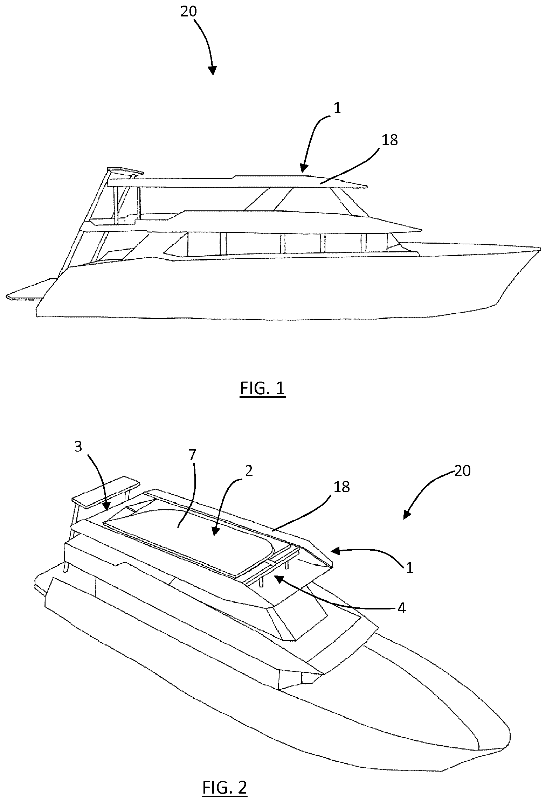

In Figs. 1 and 2 the boat of the invention is in a closed configuration with the photovoltaic panels 31 and 32 of the solar apparatus 3 housed in the container 18 of the roof 1 and the solar sail 2 closed and also folded in the container 18 above of the panels 31 and 32. In the front part of the roof 1 is visible the first mechanized supporting structure 4 which constitutes the support of the solar sail 2. As it is possible to observe in particular in Fig. 1, in the closing configuration neither the solar apparatus 3 nor the wind-solar apparatus 2 are visible to a normal observer placed at a height not higher than that of the boat, therefore the aesthetics of the boat is not altered in any way by the presence of said devices.

In Fig. 3 the solar sail 2 is vertically raised and open. In this position, with the route, the wind direction and the favorable sea weather conditions, the sail can collaborate in the propulsion taking advantage of the wind thrust incident on the sail surface exactly as it happens in a sailing boat. Furthermore, depending on the type of photovoltaic elements associated with the solar sail 2, there may be some photovoltaic energy production despite the angle of incidence of the solar rays on the panels of the solar sail 2 is presumably not optimal.

In Fig. 4 the solar gazebo 3 is open with the further panels 32 lying side by side with the central panel 31. In this configuration, besides exploiting the propulsive action of the wind and a partial photovoltaic production of the solar sail, the solar apparatus 3 is arranged in a photovoltaic production configuration.

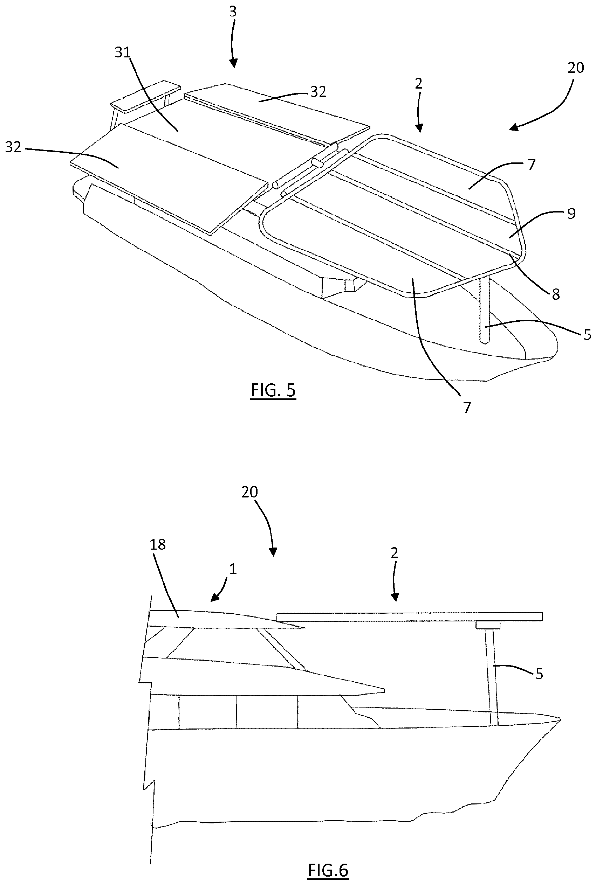

In Figs. 5 and 6, the solar sail 2 is extended forward in a horizontal configuration facing the bow and a support shaft 5, exiting with hydraulic actuation, constitutes a support in the proximity of the bow when the sail is tilted forward. In fact, especially in the case of formed sea, if you want to use the solar sail 2 lying horizontally towards the bow, it is advisable to create a support in the front area that can be fixed and stable or hydraulically removable from the deck, best solution only for aesthetic reasons. In this configuration the propulsive action of the wind on the solar sail 2 is not exploited but the production of photovoltaic energy is maximized.

In a boat according to the present invention, with the solar wind apparatus 2 and the solar apparatus 3 suitably sized, at about half the cruising speed, with breeze winds typical of the summer season and coming from dials compatible with the route to be held, fuel consumption with the "raised sail" can be almost half the consumption without the sail raised due to the direct wind effect. Consider that a boat of about 30 meters in these conditions could consume (at medium/low speed) about 150 liters/hour of fuel which would become less than half. Furthermore, at least 3/4 hours of travel can be carried out using the energy stored in the batteries through the photovoltaic system while moored in port, without navigation. Moreover, even when navigating the apparatuses 2 and 3 produce electricity with the photovoltaic panels that is stored in the batteries to allow a further non-negligible autonomy with the electric motors alone. This happens even when the wind direction does not allow the "exploitation" of the sail as it cannot be safely used .

With a wind of moderate intensity and coming from favorable directions, the solar sail 2 can be used in a raised configuration that will give a certain contribution to navigation regardless of the use of the photovoltaic energy which is producing as it translates the thrust directly into "propulsion" which receives from the wind, reducing fuel consumption (if you are navigating with endothermic engines) or absorbing electricity if you are sailing only "electrically" at relatively low speeds.

This way the boat of the present invention allows not only endothermic and photovoltaic energy to be exploited for propulsion, with endothermic and electric engines, respectively, but also the wind effect, which is directly received, is also significant, with an output not affected by the transformation cycle into electrical energy typical of wind generators.

As the wind intensity increases, or when the direction of origin of the same is even incompatible with the route, the solar sail 2 is closed and/or lowered. Advantageously, the management and control system of the wind-solar 2 and solar 3 apparatuses is equipped with suitable control devices which must provide for emitting alarms and/or for activating automatic mechanisms for reducing the solar sail 2 as wind speed approach such values as to be able to generate uncomfortable situations on board or of inappropriateness. Advantageously, even in the worst overlap of events and/or failures, many prearranged devices capable of manually/forcibly/automatically implementing the appropriate emergency maneuvers will be active.

Still in a preferred embodiment, the boat 1 is provided with anemometers or other wind direction and speed sensors and/or solar sensors and the management and control system is configured to process information from said sensors and automatically control the devices for moving the wind-solar apparatus 2 and the solar apparatus 3 to maximize the production of photovoltaic energy and to obtain the maximum wind propulsive thrust.

## Claims

1. Pleasure boat (20) with an endothermic and electric hybrid engine comprising a photovoltaic complex for the production of electric energy suitable for recharging batteries of said boat also intended to supply electric motors of said boat, said photovoltaic complex comprising:
- a wind-solar apparatus (2) comprising:
- a sail (7, 9) coated with photovoltaic panels,
- a first mechanized supporting structure (4) adapted to support said sail (7, 9) and move it from a horizontal position in which it longitudinal rests on the hull to a vertical or sub-vertical position suitable for exploiting the thrust of the wind;
said boat (20) being **characterized in that** it comprises:
- a solar apparatus (3) comprising a flat supporting structure integrated in a roof (1) located on the top of a deck plan, preferably of a fly-bridge, of said boat (20), said flat supporting structure being substantially a container (18) which carries a fixed solar panel (31) on which two further solar panels (32) are placed hinged longitudinally so as to be able to rotate to the sides of said container (18),
- a control and management system based on algorithms and instrumental commands suitable for activating and controlling the operation of said wind-solar apparatus (2) and of said solar apparatus (3); and
wherein in a not-in-use configuration said solar panels (31, 32) of said solar apparatus (3) and said wind-solar apparatus (2) are housed inside said container (18) located on the roof (1) on the top of a deck plan of said boat (20).

2. Boat (20) according to claim 1 **characterized in that** said sail (7, 9) has an overall pentagonal shape and comprises:
- a central fixed element (9) directly supported by a shaft (8) hinged to the base on said supporting structure (4) associated with said roof (1); and
- two side panels (7) which can fold over said central element (9) to decrease the surface of said sail so that it can lie inside said container (18) above said solar panels (32) of said solar apparatus (3).

3. Boat (20) according to one of the previous claims, **characterized in that** said first mechanized supporting structure (4) allows said sail to rotate from a horizontal position reclined astern, passing through said vertical position, to a horizontal position lying towards the bow, in which said sail rests on a supporting shaft (5) arranged near the bow of said boat.

4. Boat (20) according to one of the previous claims, **characterized in that** said sail is preferably made of semi-rigid or rigid panels and is coated on both sides by photovoltaic panels which, by means of special conduits obtained in the structure of said sail, send the energy produced to a regulation and accumulation system made of batteries allocated in appropriate compartments located inside said boat (20).

5. Boat (20) according to one of the previous claims, **characterized in that** Boat (20) according to one of the previous claims **characterized in that** said mechanized supporting structure (4) of the wind-solar apparatus comprises an axle (10) integral with said shaft (8) near an end thereof, said axle (10) being arranged to pass through two supports with bearings (11) which constrain said axle (10) transversely to said roof (1) allowing its rotation, said axle (10) being connected to at least one geared motor suitable for rotating it.

## Patentansprüche

1. Vergnügungsboot (20) mit einem endothermen und elektrischen Hybridmotor, das einen photovoltaischen Komplex zur Erzeugung von elektrischer Energie umfasst, die zum Aufladen der Batterien des Bootes geeignet und auch zur Versorgung der Elektromotoren des Bootes bestimmt ist, wobei der photovoltaische Komplex umfasst:
- eine Wind-Solar-Vorrichtung (2) mit:
- ein Segel (7, 9), das mit photovoltaischen Platten beschichtet ist,
- eine erste mechanisierte Tragstruktur (4), die geeignet ist, das Segel (7, 9) zu tragen und es aus einer horizontalen Position, in der es in Längsrichtung auf dem Rumpf ruht, in eine vertikale oder sub-vertikale Position zu bringen, die geeignet ist, den Windschub zu nutzen;
wobei das Boot (20) **dadurch gekennzeichnet ist, dass** es umfasst:
- eine Solarvorrichtung (3), die eine flache Tragstruktur umfasst, die in ein Dach (1) integriert ist, das sich auf der Oberseite eines Decks, vorzugsweise einer Flybridge, des Bootes (20) befindet, wobei die flache Tragstruktur im Wesentlichen ein Behälter (18) ist, der ein festes Solarpaneel (31) trägt, auf dem zwei weitere Solarpaneele (32) angebracht sind, die in Längsrichtung schwenkbar sind, so dass sie sich zu den Seiten des Behälters (18) drehen können,
ein Steuer- und Managementsystem, das auf Algorithmen und instrumentellen Befehlen basiert, die geeignet sind, den Betrieb der Wind-Solar-Vorrichtung (2) und der Solarvorrichtung (3) zu aktivieren und zu steuern; und
wobei in einer Nichtgebrauchskonfiguration die Solarpaneele (31, 32) der Solarvorrichtung (3) und der Wind-Solar-Vorrichtung (2) im Inneren des Containers (18) untergebracht sind, der sich auf dem Dach (1) auf der Oberseite eines Deckplans des Bootes (20) befindet.

2. Boot (20) nach Anspruch 1, **dadurch gekennzeichnet, dass** das Segel (7, 9) eine insgesamt fünfeckige Form aufweist und umfasst:
- ein zentrales festes Element (9), das direkt von einer Welle (8) getragen wird, die an der Basis der mit dem Dach (1) verbundenen Tragstruktur (4) angelenkt ist; und
- zwei Seitenteile (7), die über das zentrale Element (9) gefaltet werden können, um die Oberfläche des Segels zu verkleinern, so dass es im Inneren des Behälters (18) über den Solarzellen (32) der Solarvorrichtung (3) liegen kann.

3. Boot (20) nach einem der vorhergehenden Ansprüche, **dadurch gekennzeichnet, dass** die erste mechanisierte Tragstruktur (4) es dem Segel ermöglicht, sich von einer horizontalen, nach achtern geneigten Position über die vertikale Position in eine horizontale, zum Bug hin liegende Position zu drehen, in der das Segel auf einer Stützwelle (5) ruht, die in der Nähe des Bugs des Bootes angeordnet ist.

4. Boot (20) nach einem der vorhergehenden Ansprüche, **dadurch gekennzeichnet, dass** das Segel vorzugsweise aus halbstarren oder starren Paneelen besteht und beidseitig mit photovoltaischen Paneelen beschichtet ist, die mittels spezieller Leitungen, die in der Struktur des Segels vorgesehen sind, die erzeugte Energie an ein Regulierungs- und Akkumulationssystem senden, das aus Batterien besteht, die in geeigneten Fächern im Inneren des Bootes (20) angeordnet sind.

5. Boot (20) nach einem der vorhergehenden Ansprüche, **dadurch gekennzeichnet, dass** Boot (20) nach einem der vorhergehenden Ansprüche, **dadurch gekennzeichnet, dass** die mechanisierte Tragstruktur (4) der Wind-Solar-Vorrichtung eine Achse (10) umfasst, die mit der Welle (8) in der Nähe eines Endes derselben fest verbunden ist, wobei die Achse (10) so angeordnet ist, dass sie durch zwei Stützen mit Lagern (11) verläuft, die die Achse (10) quer zum Dach (1) einspannen und ihre Drehung ermöglichen, wobei die Achse (10) mit mindestens einem Getriebemotor verbunden ist, der sie drehen kann.

## Revendications

1. Bateau de plaisance (20) avec un moteur hybride endothermique et électrique comprenant un complexe photovoltaïque pour la production d'énergie électrique apte à recharger des batteries dudit bateau également destiné à alimenter des moteurs électriques dudit bateau, ledit complexe photovoltaïque comprenant:
- un appareil éolien-solaire (2) comprenant:
- une voile (7, 9) revêtue de panneaux photovoltaïques,
- une première structure de support mécanisée (4) adaptée pour supporter ladite voile (7, 9) et la déplacer d'une position horizontale dans laquelle elle repose longitudinalement sur la coque à une position verticale ou sub-verticale appropriée pour exploiter la poussée du vent;
ledit bateau (20) étant **caractérisé en ce qu'**il comprend:
- un appareil solaire (3) comprenant une structure de support plate intégrée dans un toit (1) situé au sommet d'un plan de pont, de préférence d'un pont supérieur, dudit bateau (20), ladite structure de support plate étant essentiellement un conteneur (18) qui porte un panneau solaire fixe (31) sur lequel sont placés deux autres panneaux solaires (32) articulés longitudinalement de manière à pouvoir tourner sur les côtés dudit conteneur (18),
- un système de contrôle et de gestion basé sur des algorithmes et des commandes instrumentales appropriées pour activer et contrôler le fonctionnement dudit appareil éolien-solaire (2) et dudit appareil solaire (3); et
dans lequel, dans une configuration de non-utilisation, lesdits panneaux solaires (31, 32) dudit appareil solaire (3) et dudit appareil éolien-solaire (2) sont logés à l'intérieur dudit conteneur (18) situé sur le toit (1) au sommet d'un plan de pont dudit bateau (20).

2. Bateau (20) selon la revendication 1 **caractérisé en ce que** ladite voile (7, 9) a une forme globalement pentagonale et comprend:
- un élément central fixe (9) directement supporté par un arbre (8) articulé à la base sur ladite structure de support (4) associée audit toit (1); et
- deux panneaux latéraux (7) qui peuvent se replier sur ledit élément central (9) pour diminuer la surface de ladite voile afin qu'elle puisse se trouver à l'intérieur dudit conteneur (18) au-dessus desdits panneaux solaires (32) dudit appareil solaire (3).

3. Bateau (20) selon l'une des revendications précédentes, **caractérisé en ce que** ladite première structure de support mécanisée (4) permet à ladite voile de pivoter d'une position horizontale inclinée vers l'arrière, en passant par ladite position verticale, à une position horizontale couchée vers l'avant, dans laquelle ladite voile repose sur un arbre de support (5) disposé près de l'avant dudit bateau.

4. Bateau (20) selon l'une des revendications précédentes, **caractérisé en ce que** ladite voile est de préférence constituée de panneaux semi-rigides ou rigides et est recouverte sur les deux côtés par des panneaux photovoltaïques qui, au moyen de conduits spéciaux obtenus dans la structure de ladite voile, envoient l'énergie produite à un système de régulation et d'accumulation constitué de batteries réparties dans des compartiments appropriés situés à l'intérieur dudit bateau (20).

5. Bateau (20) selon l'une des revendications précédentes, **caractérisé en ce que** Bateau (20) selon l'une des revendications précédentes, **caractérisé en ce que** ladite structure de support mécanisée (4) de l'appareil éolien-solaire comprend un axe (10) solidaire dudit arbre (8) près d'une extrémité de celui-ci, ledit axe (10) étant disposé pour passer à travers deux supports avec des paliers (11) qui contraignent ledit axe (10) transversalement audit toit (1) permettant sa rotation, ledit axe (10) étant relié à au moins un motoréducteur approprié pour le faire tourner.
